# EUROPEAN PATENT APPLICATION

(11) **EP 0 700 873 A1**
(43) Date of publication of application: **13.03.1996**
(21) Application number: 94914646.8
(22) Date of filing: 28.04.1994
(51) Int. Cl.: C02F 3/02, C02F 1/24

(54) **WASTE WATER TREATMENT METHOD, SUSPENSED MATTER SEPARATION METHOD, AND METHOD FOR SATURATING A LIQUID WITH A GAS**

(30) Priority: 25.05.1993 RU 93028161
(71) Applicant: NAUCHNO-PROIZVODSTVENNA YA FIRMA BIFAR, 87-116, Moscow, 123371 (RU)
(72) Inventor: AGRANONIK, Robert Yakovlevich, Moscow, 123459 (RU); PISKLOV, Gennady Alexeevich, Moscow, 119270 (RU)
(74) Representative: Popp, Eugen, Dr.
(86) International application number: PCT/RU94/00096
(87) International publication number: WO 94/27918

(57) **Abstract**

A method for treating waste water involves mixing the waste water with an active slurry and water saturated with air under excess pressure. Following pressure reduction, air bubbles separate out from the liquid supersaturated with gas, and biological oxidation of impurities by means of the active slurry together with flotation are carried out at the same time in a single reaction chamber. A part of the treated water is saturated with air and is returned to the head end of the process. Excess active slurry is drawn off together with part of the non-oxidized, floated impurities. A method for separating suspended matter not requiring biological oxidation of impurities also includes separation by flotation and recirculation of part of the liquid phase, with intermediate saturation of the latter with air under pressure. The process for saturating a liquid with gas, used in one of the stages of both biological treatment of waste water and separation of suspended matter, can be used as an independent process in various industries. A saturator is used for saturation purposes and consists of a pipe network made up of at least two loops having a common portion. The pipe network is vertical or almost vertical, has downward and upward stream portions, and two ejectors mounted in series on the upper portion of the pipe carrying the downward stream. The downward-flowing stream divides into two streams directed to each of the ejectors, thereby providing common recirculation of liquid and of still undissolved gas, whereby the liquid is totally saturated with gas. Excess undissolved gas is drawn off together with the gas-saturated liquid. The latter is drawn off at the top portion of the pipe carrying the upward-flowing stream.

## Description

### Field of the invention

The invention relates to the field of wastewater treatment and, in general, could be used for municipal and industrial wastewater biological treatment, combined with a process of microflotation. In particular this invention could be used as a separation method for suspensions containing pollutants that are not required to be biologically oxidized. At last the process of liquid saturation with gas which is used at one of the stages of biological wastewater treatment as well as in method of suspensions separation could also be used as an independent method in other areas.

### Background of the invention

There is known biological wastewater treatment method using a two-chamber unit equipped with electrodes that generate oxygen and hydrogen (USSR Invention Certificate N 998381, C 02 F 3/00, filed 30.09.81). Sewage comes to the aeration chamber, where it is saturated with oxygen that is generated at the anode. Pollutants are oxidized to carbon dioxide with microorganisms that are coming from flotation chamber. The intensive mixing in the aeration chamber increases the oxygen dissolving rate and complete oxidation of pollutants. Then sewage along with microorganisms goes through the transfer port to the flotation chamber, where microorganisms are flotated by hydrogen bubbles that is generated at the cathode. Floated microorganisms are returned to the aeration chamber, waste portion of these are removed.

The described method requires a considerable energy consumption, extended in time due to two stages of treatment and requires a lot of oxygen for complete oxidation of pollutants.

There is method of suspensions separation, in particular for a sewage treatment, where a dissolved air flotation is used. In this method the liquid is saturated under pressure in a saturator (Deryagin B.V., Dukhin S.S., Rulev N.N. Microflotation. Moscow, "Chimiya" 1986, p.76-79, drawing 30h). Method includes the mixing of suspension with flotoagent and separation to the solid and liquid phase. Portion of the liquid phase is saturated with gas under pressure and supplied for mixing with a suspension (sewage) that goes through the separation process.

This method also does not have high rate and does not have high efficiency. Besides, there is a use of a separator that works under pressure resulting in explosive conditions.

This separator receives liquid and gas where they are in contact under pressure. The liquid that is saturated with gas goes out of saturator. The liquid could be a sewage and the gas could be an air. Undissolved gas goes back in the beginning of the process; excessive portion of gas goes to the atmosphere, which is one of the disadvantages of the method.

### Disclosure of Invention

In the proposed method sewage are mixed with active sludge and water that is saturated with air under pressure. In the reactor, due to pressure reduction the dissolved air comes out of the water as microbubbles. These microbubbles slowly raise at the rate of about 1mm/second, flotating active sludge along with pollutants. At the same time liquid is supersaturated with air which gives, along with flotation, all the necessary conditions for intensive biochemical oxidation of organic pollutants by active sludge microorganisms.

To maintain the process continuity, a portion of flotated active sludge are returned to mix it with sewage. The rest of the sludge is removed along with the portion of pollutants that haven't been oxidized. Treated waste water effluent are divided into two parts. One of them exit the system the other one is saturated with air under high pressure and then returned back to reactor for mixing with untreated sewage.

Thereby continuous circulation of active sludge portion as well as treated waste water portion are performed in this method. The necessary ratio between these are maintained. Also, biological oxidation of pollutants and flotation take place together and simultaneously at the same reaction chamber.

A method of suspensions separation, that are not required biological oxidation of pollutants, includes the supply of initial suspension for mixing with flotoagent and flotation separation into the solid and liquid phase. The solid phase are removed continuously, the liquid phase is saturated under excessive pressure and then supplied to the additional flotation stage; after this stage the clarified liquid is removed. Flotocomplexes that are generated at this stage are used as a flotoagent that are mixed with incoming suspensions.

According to other embodiment of suggested method liquid phase that has been saturated with air are divided into two different streams. One of these goes for additional flotation, other one goes for mixing with incoming suspension.

And, according to third embodiment, clarified liquid are divided into two streams. One of these are removed, its volume is equal to the difference between the volumes of incoming suspension and outgoing solid phase, other one is supplied along with liquid phase for saturation with air.

Saturation of liquid with air in the said processes could be implemented using any convenient way, but the most economical and preferable method is a method described below and included in the application being a part of it.

As in the case described by Deryagin B.V. and others, the method of liquid saturation with gas includes supplying of the liquid and gas under pressure into saturator, recirculation of undissolved gas, withdrawal of liquid that has been saturated with air and, withdrawal of excessive undissolved gas. But, as it is in the invention, saturator is not in the form of tank or reservoir, but is the circuit of pipes forming at least two loops that have one common section. Pipes are positioned vertically or have positioned close to be vertical. The circuit includes upgoing and downgoing stream pipes and two ejectors located one after another in the upper part of the downgoing stream pipe. This stream is divided into two streams each of these goes into each ejector which maintain joint recirculation of liquid and gas that is still undissolved. During such recirculation a complete saturation of liquid with gas takes place. Excessive undissolved gas are withdrawn along with liquid, saturated with gas. The withdrawal of the saturated liquid are performed from the upper part of the upgoing strem pipe. In the preferred embodiment of the process liquid that has been saturated with gas, are withdrawn through the pipe that is inclined down.

### Brief description of drawings

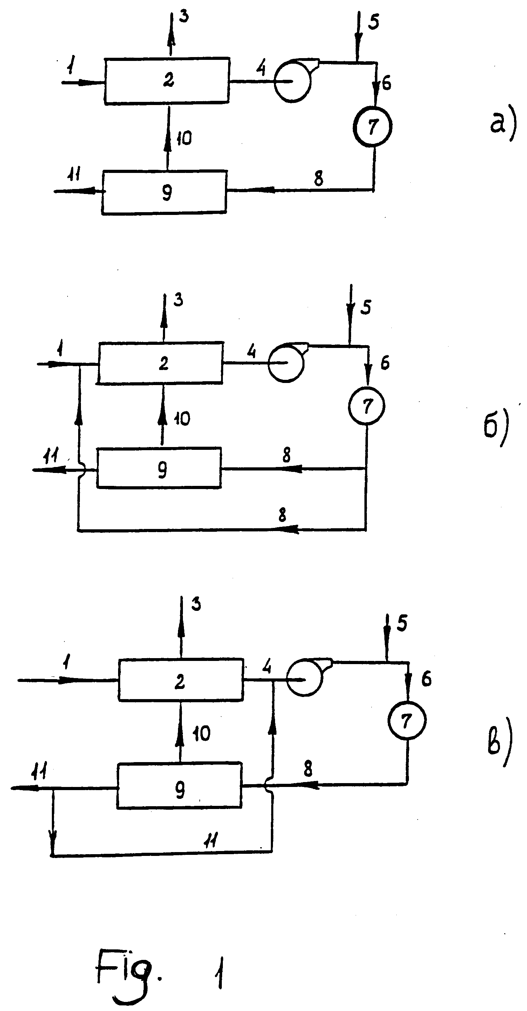

Fig 1a,b,c show various possible flow arrangements according to the invented method of suspensions separation.
There are following positions on the drawings:
1 - incoming suspension stream;
2 - flotation separation zone or stage;
3 - solid phase removal;
4 - liquid phase goes to be mixed with air;
5 - air supplying stream;
6 - water-air mixture goes to saturator 7;
8 - liquid phase saturated with air goes to the additional flotation stage 9 (also, on Fig.1b to the flotation separation stage 2);
10 - withdrawal of flotocomplexes from the stage 9 to the stage 2 (suspension flotation separation);
11 - exit of clarified liquid (also to the mixing with air, as on Fig. 1b).

Flotation separation and additional floatation stages are numbered on these figures differently (#2 and #9) which does not mean though that they each require different unit. More often these stages are located in different zones of the same unit. Flotation separation stage/zone is located in the upper portion and additional flotation stage/zone is located in the bottom portion of the unit. A horizontal screen in the middle of the unit may serve as a border between these zones; it is located slightly above the inlet of the liquid phase that is saturated with air.

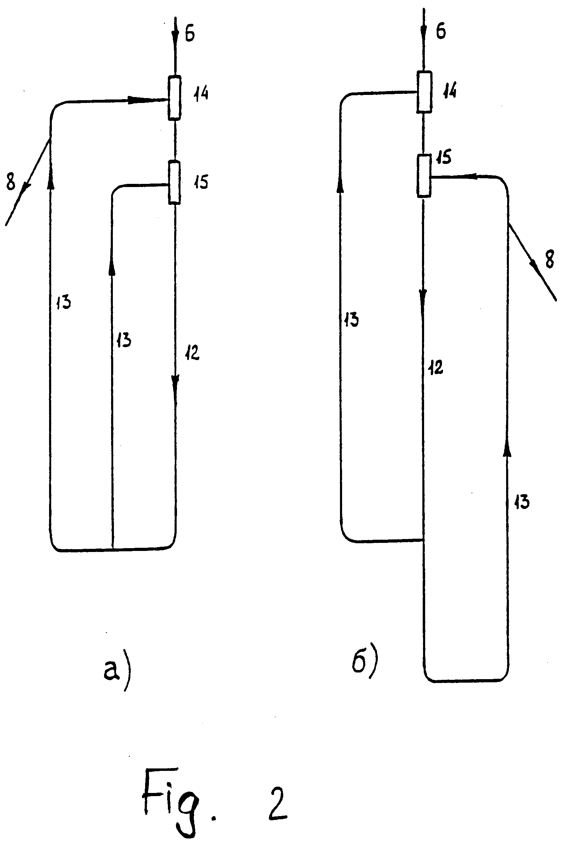

There are two configurations of pipe circuits equipped with ejectors, that are used as saturators (Fig. 2a,b).

The pipe where the stream goes down is numbered #12, upgoing stream pipe is #13, upper ejector is #14, bottom ejector is #15.

Said methods will be disclosed in more details in following examples.

### Example 1

Municipal sewage that had BOD (biochemical oxygen demand) 150 mg/L and SS (suspended substances) 150 mg/L was mixed in the reactor with active sludge (active sludge dose was 25-30 g/L) and water (that has been saturated with air under pressure of 0.8 MPa) following the flow rate ratio of 1:1:2. The active sludge and water to be saturated with air and subsequently supplied to the head of the process were withdrawn at the reactor exit. Waste active sludge that has 94-96 % water content along with unoxidized part of pollutants was removed from the surface of reactor.

The concentration of pollutants In the treated water was: BOD = 4 mg/L and SS = 5 mg/L while the process duration was equal to 1.8 hrs. The waste water that had same input parameters were treated by conventional known method for 4.2 hrs and result was BOD = 15 mg/L and SS = 12 mg/L.

### Example 2.

Waste water that has been generated at the yeast growing and processing factory - Q = 100 m³/hr, SS = 4 g/L was pumped to the flotation separator. At the same time flotocomplexes serving as a flotoagent from a stage of additional flotation were introduced to the separator. The duration of the flotation separation process was 0.9 hours. The solid phase of the suspension, that were concentrated on the surface was removed continuously using a transporting mechanism. A liquid phase after the flotation separation (Q = 120 m³/hr) was saturated with air under excessive pressure that was equal to P = 0.65 MPa and then supplied for additional flotation, where, as a result of pressure reduction (up to the atmospheric pressure) the bubbles of air were arisen and attached to the surface of the fine solid phase particles. Thereby flotocomplexes were generated and after they had raised up to the surface, were supplied along with the excessive volume of the liquid phase (20 m³/hr) to the flotation separation using it as a flotoagent (Fig. 1a).

The clarified liquid that has SS concentration = 45 mg/L was removed from the additional flotation stage. The duration of additional flotation stage was 0.4 hrs; total duration of the process was 1.3 hrs.

In the known method the concentration of suspended solids in the liquid phase after separation was 240 mg/L, duration of the process being 1.8 hrs.

### Example 3.

Active sludge (Q=100 m3/hr, incoming SS=5g/L) was supplied for flotation separation simultaneously along with the flotoagent (flotocomplexes from the stage of additional flotation). The duration of the flotation separation was equal to 1.5 hrs. The solid phase in the form of the a foam product was removed from the surface of the flotator. Liquid phase (Q=200m3/hr) was saturated with air under pressure P=0.35 MPa. After the saturation liquid phase was divided into two equal streams, one of which was supplied to the additional flotation stage, the other one went to the mixing with incoming suspension (active sludge) (Fig.1b).

The clarified liquid that has been removed after the additional flotation contained SS=25 mg/L. The duration of the additional flotation was 0.4 hr.

Comparing to the known method, SS concentration in the clarified water are reduced from 70 to 25 mg/L; the duration of the process could be reduced as well from 2.4 to 1.9 hrs.

### Example 4.

Active sludge (Q=100m³/hrs, SSin=5g/L) were supplied to the stage of the flotation separation simultaneously with flotoagent (flotocomplexes from the additional stage phase). The solid phase that was in the form of foam (Q=10m³/hr) was removed from the surface of the flotator. Liquid phase (Q=100m³/hr) along with the portion of the clarified liquid from the stage of additional flotation (Q=100m³/hr) was saturated with air under P=0.35 MPa. The liquid that was saturated with air (Q= 200 m³/hr) was supplied to the additional flotation stage where the pressure was reduced and as a result a small bubbles air were separated from this supersaturated solution. Bubbles became attached to the surface of fine particles of the solid phase, therefore flotocomplexes were formed. These along with the part of the liquid phase (10m³/hr) were supplied to stage of flotation separation. Clarified liquid phase, after the stage of additional flotation was divided into two different streams one of which (Q=90 m³/hr) was removed the other one (Q=100 m³/hr) was supplied along with the liquid phase after flotation saturation stage for the saturation with air (Fig. 1b).

Duration of the flotation separation stage was 0.75 hr., additional flotation stage lasted 0.85 hrs. Concentration of suspended solids in the clarified liquid was 25mg/L.

### Example 5.

Pretreated municipal sewage (Q=40m³/hr) at T=20C were mixed with air (Q=0.36 m³/hr) under excessive pressure P=0.8 MPa and then mixture was downstreamed through the pipe at the rate of 0.65 m/sec. This stream divided into two, one of these goes to the upper ejector, other one to the bottom ejector; thereby two loops were formed through which the air-water mixture recirculates (Fig. 2a). The volume of the air-water mixture that flows through the bottom ejector was 20 m³/hr, through upper ejector - 40.5 m³/hr. Water, that has been saturated with air was withdrawn at the rate of 0.11 m/sec.

Saturation time for sewage with air was 0.65 min. If a traditional saturator was used in the known method then saturation time is 3-5 min.

### Industrial applicability.

Possible areas of application of suggested inventions were already shown while particular examples of use for these methods were described, though are not reduced to said industrial areas.

## Claims

1. A waste water treatment method comprising the mixing of these with active sludge and saturation with oxygen, biological oxidation of pollutants with active sludge, flotation of the sludge suspension, circulation of the active sludge and removal of excessive sludge as well as treated water, wherein the biological oxidation of pollutants and flotation are performed jointly at the same reactor chamber, for what purpose the treated water from reactor are saturated with air under excessive pressure and then returned back to the reactor in order to be mixed with sewage, the part of unoxidized flotated pollutants are removed along with waste active sludge.

2. The method of claim 1 wherein flow rate of treated water stream which is saturated with air is higher than flow rate of incoming sewage stream.

3. A method of suspensions separation by flotation comprising mixing of suspension with flotoagent, separation into liquid and solid phases, withdrawal of the solid phase, saturation of the liquid phase with air under excessive pressure and following direction of it to the head of the process, wherein liquid phase are treated before mixing by additional flotation after which clarified liquid is withdrawn and formed flotocomplexes are used as a flotoagent that are mixed with incoming suspension.

4. The method of claim 3 wherein liquid phase that has been saturated with air is divided into two streams one of which is directed to the additional flotation, other one is directed for mixing with incoming suspension.

5. The method of claim 3 wherein clarified liquid is divided into two streams, one of which having as much the flow rate as the difference between the flow rate of incoming suspension and flow rate of suspended solids is removed and the other one along with a liquid phase is directed to saturation with air.

6. A method of saturation of liquid with gas comprising supply of liquid and gas into the saturator under pressure, recirculation of undissolved gas, withdrawal of the liquid that has been saturated with gas and withdrawal of the excessive undissolved gas, wherein the saturator is the circuit of pipes having the sections with upgoing and downgoing streams and also having two ejectors, located one after another on the upper part of the downgoing strem pipe, downgoing stream is divided into two different streams, that are directed in each ejector, recirculation of undissolved gas and withdrawal of excessive undissolved gas are both performed along with liquid saturated with gas and withdrawal of the liquid saturated with gas takes place at the upper part of the upgoing stream pipe.

7. The method of claim 6 wherein downgoing stream is divided into two streams in its lower point and withdrawal of the liquid saturated with gas is performed from the pipe of upgoing stream directed to the upper ejector.

8. The method of claim 6 wherein downgoing stream is divided into two streams using a side exit that is directed into the upper ejector and the withdrawal of the liquid saturated with gas takes place from the pipe of upgoing stream directed to the lower ejector.

9. The method of claim 7 or 8 wherein withdrawal of the water that has been saturated with gas is performed through the pipe inclined down.
